# EUROPÄISCHE PATENTSCHRIFT

(11) **EP 2 027 903 B1**
(45) Veröffentlichungstag und Bekanntmachung des Hinweises auf die Patenterteilung: **04.12.2013**
(21) Anmeldenummer: 08011058.8
(22) Anmeldetag: 18.06.2008
(51) Int. Cl.: B01D 25/176

(54) **Filterelement**
Filter element
Elément de filtre

(30) Priorität: 20.06.2007 DE 202007008649 U
(43) Veröffentlichungstag der Anmeldung: 25.02.2009
(73) Patentinhaber: Junker-Filter GmbH, 74889 Sinsheim (DE)
(72) Erfinder: Schütt, Hubertus, 74889 Sinsheim (DE)
(74) Vertreter: Laufhütte, Dieter

(56) Entgegenhaltungen:
- EP-A- 0 636 397
- FR-A- 1 434 255
- GB-A- 971 456
- US-A- 5 256 312

## Beschreibung

Die Erfindung betrifft ein Filterelement für Kammer-, Membranfilter oder dergleichen gemäß dem Oberbegriff des Anspruchs 1.

Ein derartiges Filterelement ist in der DE-A 16 11 156 beschrieben. Zur Vermeidung von Brüchen im flexiblen Filtermedium wird dort vorgeschlagen, die Kett- und Schußfäden des textilen Filtermediums schräg zu den Rändern des plattenförmigen Trägerkörpers geneigt auszurichten. Das Befestigen des Filtermediums erfolgt so, dass dessen Rand in eine Nut hineingedrückt wird, die parallel zum Rand des Tragkörpers in dessen Stirnfläche vorgesehen ist. Die Fixierung des Randes des Filtermediums in dieser Nut erfolgt durch Dichtringe. Diese Art der Anbringung des Filtermediums bedingt scharfe Abknickungen des Filtermediums im Bereich der im Tragkörper vorgesehenen Nut. Auch lässt sich das Filtermedium nur sehr schwer faltenfrei in die Nut einlegen. Um Unregelmäßigkeiten wie Falten in dem in die Montagenut eingelegten Rand des Filtermediums aufzufangen, müssen die zu seinem Fixieren dienenden Dichtringe aus verhältnismäßig weichem Material gefertigt sein. In der DE-A 15 36 909 ist eine Anordnung zum Befestigen eines textilen Filtermediums an einem plattenförmigen Tragkörper eines Filterelementes beschrieben, bei welcher scharfe Knicke in den Randabschnitten des Filtermediums vermieden sind. Dies erfolgt dadurch, dass man den Rand des Filtertuches auf größerer Fläche zwischen die Stirnfläche des Tragkörpers und einer auf diesen aufgeschraubte Spannleiste einklemmt. Dabei kann in der Stirnfläche des Tragkörpers zusätzlich eine weiche Übergänge aufweisende, hinterschneidungsfreie Nut vorgesehen sein, die mit einer komplementären Nase der Klemmleiste über eine weiche Zwischenlage zusammenarbeitet. Eine derartige Art der Befestigung ist aber zum einen mechanisch aufwendig und erfordert zum anderen auch höhere Aufmerksamkeit beim Befestigen der Ränder des Filtermediums.

In der DE 87 04 934 U1 ist ferner ein Filterelement offenbart, bei welchem zur Befestigung einer flexiblen Pressmembran an einem plattenförmigen Trägerkörper vorgeschlagen wird, in der Stirnfläche des Trägerkörpers hinterschnittene Nuten vorzusehen, in welchem komplementäre Montageleisten der Membran verrastbar sind, die an einem dickeren Randabschnitt der Membran angeformt sind.

Bei weiteren im Handel erhältlichen Filterelementen für Kammer- und Membranfilter sind die Filtermedium-Zuschnitte für die einander gegenüberliegenden Stirnflächen des Tragkörpers, über den Tragkörper hinausgeführt und dort durch Schnüre, Drähte, Klammern und dergleichen miteinander verbunden. Das Anbringen der Filtermedium-Zuschnitte ist zweitaufwendig. Auch kann es bei dieser Ausbildung des Filterelementes zu einer "Querfiltration" kommen, das heißt Filtrat oder Schwebstoffe enthaltende Flüssigkeit wird in seitlicher Richtung zwischen den Platten der Filterpresse nach außen gedrückt. Dies ist im Hinblick auf das saubere Arbeiten der Filterpresse aber auch im Hinblick auf gesundheitsgefährdende Filtermedien nachteilig.

Eine derartige Querfiltration ist bei ebenfalls im Handel befindlichen Filterelementen dadurch ausgeräumt, dass bei diesen die einzelnen Tragkörper eine unmittelbar beim Rand verlaufende Nut zur Aufnahme einer Rundschnurdichtung und eine weitere innerhalb der ersten Nut liegende Nut zur Aufnahme des Randes des Filtertuchs aufweisen. Bei Verwenden derartiger Rundschnurdichtungen muss der Durchmesser des Klemmmaterials der jeweiligen Dicke des zu verwendenden Filtermediums von Fall zu Fall angepaßt werden.

Das Filtermedium kann darüber hinaus hinsichtlich seiner Vorspannung auf dem Tragkörper nur undefiniert montiert werden. Hieraus resultieren frühzeitige Abbauprozesse des Filtermediums in Folge von Überschreitung der zulässigen Kraft-Dehnungsparameter für das jeweilige Filtermedium. Aufgrund einer Überdehnung des Filtermediums ist eine Veränderung der ursprünglich spezifizierten Porengrößenverteilung des Filtermediums möglich, woraus wiederum eine Beeinträchtigung des Filtrationsverhaltens des Filtermediums folgt. Aufgrund der Tatsache, dass überstehendes Gewebe des Filtermediums üblicherweise thermisch abgeschnitten wird, ist eine thermische Beschädigung des Trägerkörpers (Werkstoff 90% Polypropylen) nicht mit Sicherheit auszuschließen. Weiter ist es nachteilig, dass mittels dieser Klemmart des Filtermediums keine 100%-ige Passung in der vorgegebenen Montagenut des Trägerkörpers gewährleistet ist. Aufgrund der sich bildenden Freiräume ist ein unerwünschtes Bakterienwachstum in der Klemmnut in Kauf zu nehmen. Schließlich ist die Montage des Filtertuchs mittels entsprechender Rundschnur sehr aufwendig und kostenintensiv.

Aus der DE 43 25 235 C2 ist es bereits bekannt geworden, das Filtermedium mittels eines angegossenen bzw. angespritzten Tuchklemmprofil zu klemmen. Hierdurch kann gegenüber dem zuvor genannten Verfahren die Montagedauer wesentlich verkürzt werden. Darüber hinaus ist gewährleistet, dass die Nutkontur des Tragkörpers vollständig ausgefüllt wird und dass damit das Wachstum von Bakterien und Produkteinlagerungen in der Klemmnut des Tragkörpers vermieden wird. Je nach chemischem oder thermischem Einsatzfall der entsprechenden Filterpresse kann es aber zu Versprödungs- und Schrumpfungserscheinungen kommen. Bei verfahrenstechnisch notwendige Waschen und Trockenblasen des zu filtrierenden Produkts erfolgt eine Extrembelastung des Filtermediums entgegen der Montagerichtung, wodurch das Filtermedium aus der Klemmnut des Tragkörpers herausspringen kann.

Aufgabe der vorliegenden Erfindung ist es daher, ein Filterelement gemäß dem Oberbegriff des Anspruchs 1 derart weiterzubilden, dass der Filtermedium-Zuschnitt einfach montierbar und auch bei extremen Betriebsbedingungen sicher fixiert ist.

Diese Aufgabe wird erfindungsgemäß durch eine Kombination der Merkmale des Anspruchs 1 gelöst.

Demnach ist ein Filterelement für Kammer-, Membranfilter oder dergleichen bereitgestellt, das einen plattenförmigen Tragkörper aufweist, in welchem Öffnungen zum Zuführen von zu filtrierendem Medium sowie zum Abführen von Filtrat vorgesehen sind. Ein flexibler Filtermedium-Zuschnitt wird in einem Montagerahmen zum lösbaren Anbringen dieses Filtermedium-Zuschnittes in einer am Tragkörper vorgesehenen umlaufenden Montagenut festgelegt. Da weist der Filtermedium-Zuschnitt ein in sich geschlossenes, aufblasbares Hohlkörperprofil zur Festlegung des Filtermedium-Zuschnitts in der Montagenut am Tragkörper auf.

Durch dieses in sich geschlossene, aufblasbare Hohlkörperprofil kann der Filtermedium-Zuschnitt in besonders einfacher Art und Weise montiert werden. Er wird hierzu auf den Tragkörper aufgelegt, wobei das integrierte Hohlraumprofil im entspannten Zustand in die in der Trägerplatte eingefräste Klemmnut eingelegt wird. Nach entsprechendem Einlegen wird das Hohlprofil aufgeblasen, so dass sich dieses an die Kontur der - vorteilhaft hinterschnittenen - Nut anlegt und somit die Nut vollständig ausfüllt. Das Aufblasen des Hohlkörperprofils erfolgt vorteilhaft mit einem gasförmigen kompressiblen Medium, beispielsweise Luft. Im Rahmen der Erfindung kann aber auch ein anderes Medium eingesetzt werden, um das Hohlkörperprofil aufzublasen. Wesentlich ist es, dass der Haftreibungsschluss des Hohlkörperprofils in der Nut im Betrieb größer ist als der Gegendruck durch die Aufblasung des Filtermediums während des Betriebs des Filters, so dass ein Herausspringen des Hohlkörperprofils aus der Nut auch bei extremen Betriebsbedingungen des Filters sicher verhindert werden kann.

Bevorzugte Ausgestaltungen der Erfindung ergeben sich aus den sich an den Hauptanspruch anschließenden Unteransprüchen.

Demnach kann das Hohlkörperprofil fahnenförmig ausgebildet sein, wobei die vom Hohlkörperprofil wegstehende Fahne einen Saum bildet, mit dem das Hohlkörperprofil in einfacher Weise mit dem Filtermedium-Zuschnitt verbindbar ist. Dabei kann das fahnenförmige Hohlkörperprofil an das Filtermedium vorteilhaft angenäht, angeschweißt, angeklebt, angegossen oder angespritzt sein. Auch Kombinationen der Verbindungstechnologien sind möglich.

Zum Befüllen bzw. Druckablassen ist das Hohlkörperprofil vorteilhaft mit einem Be- und/oder Entlüftungsventil versehen. Ähnlich einem Fahrradschlauch kann auch nur ein Ventil vorgesehen sein.

Das Hohlköperprofil kann aus einem chemikalienbeständigen Material wie beispielsweise EPDM (Ethylen-Propylen-Dien-Kautschuk), NBR (Nitril-Butyl-Rubber), Silikon oder Viton® (Marke der Firma Dupont für Fluorelastomere) bestehen.

Im Tragprofil sind vorteilhaft Ausnehmungen vorgesehen, in die die Ventile des Hohlkörperprofils einsetzbar sind. Diese Ausnehmungen sind für den Betrieb der Filterpresse mittels Schutzkappen abdeckbar.

Vorteilhaft ist die Montagenut hinterschnitten ausgeführt. Hierdurch können sich die aufgeblasenen Hohlkörperprofile besonders gut in der Montagenut festsetzen.

Die Hohlkörperprofile können unterschiedliche Formen annehmen. Ihr Querschnitt kann beispielsweise kreisrund oder mehreckig oder auch ellipsenförmig ausgebildet sein.

Vorteilhaft kann die Oberfläche des Hohlkörperprofils widerhakenartige Vorsprünge aufweisen.

Weitere Merkmale, Einzelheiten und Vorteile der Erfindung ergeben sich aus den anhand eines Ausführungsbeispiels unter Bezugnahme auf die Zeichnung dargestellten Erläuterungen. Es zeigen:
- Figur 1:: eine Ansicht auf ein Filterelement, bei welchem in der rechten Hälfte die Filtertuchbespannung abgenommen ist,
- Figur 2:: einen vergrößerten transversalen Schnitt durch einen Randbereich einer Trägerplatte des Filterelementes nach Figur 1 und
- Figur 3:: verschiedene Ausführungsformen für den Querschnitt des Hohlkörperprofils, der an den Filtertuch-Zuschnitt des Filterelements nach Figur 1 angeformt ist.

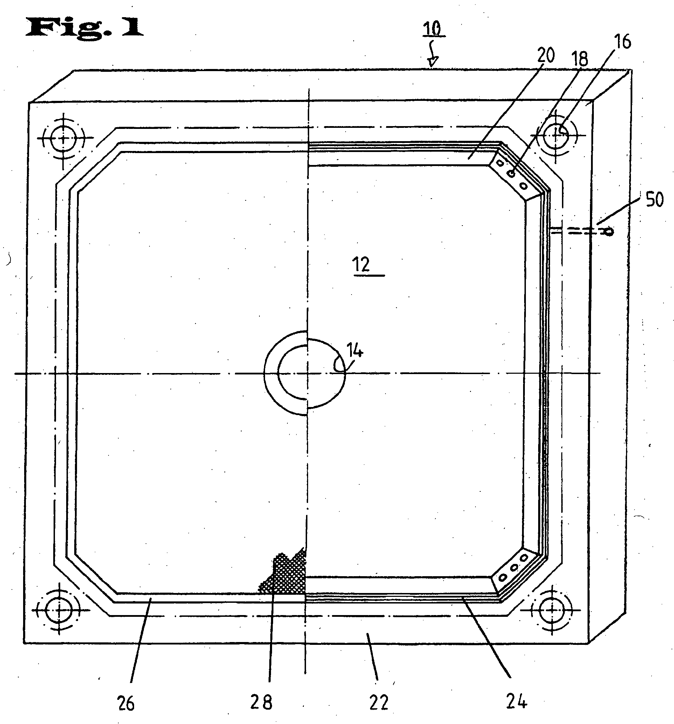

Figur 1 zeigt eine Trägerplatte 10, die mit einer ihren größten Teil überdeckenden Vertiefung 12 versehen ist.

Eine mittige Durchgangsöffnung 14 dient zum Zuführen von Feststoffen enthaltender zu filtrierender Flüssigkeit, während in den Eckabschnitten der Trägerplatte 10 vorgesehene Öffnungen 16 zum Abführen von Filtrat und/oder Zuführen von Waschflüssigkeit und/oder Zuführen von gasförmigen Behandlungsmedien wie Trockenluft dienen. Die Öffnungen 16 stehen beispielsweise über Öffnungen 18 mit der Vertiefung 12 in Verbindung, die in der schräg abfallenden Randwand 20 der Vertiefung 12 ausgebildet sind.

Im außerhalb der Vertiefung 12 liegenden Randabschnitt 22 der Trägerplatte 10 ist parallel zu der Vertiefung 12 umlaufend eine Montagenut 24 vorgesehen. In dieser sitzt formschlüssig ein Hohlkörperprofil 26, welches am Rand eines Filtertuch-Zuschnitts 28 angeordnet ist, beispielsweise angegossen, angespritzt, angeklebt, angeschweißt und/oder angenäht ist. Unabhängig von der Art der Anbringung ist es wichtig, dass die Porosität des Filtertuch-Zuschnittes an der Befestigungsstelle unterbrochen ist, so dass Flüssigkeit im Filtertuch nicht über die Befestigungsstelle nach außen wandern kann und somit eine Querfiltration sicher verhindert werden kann.

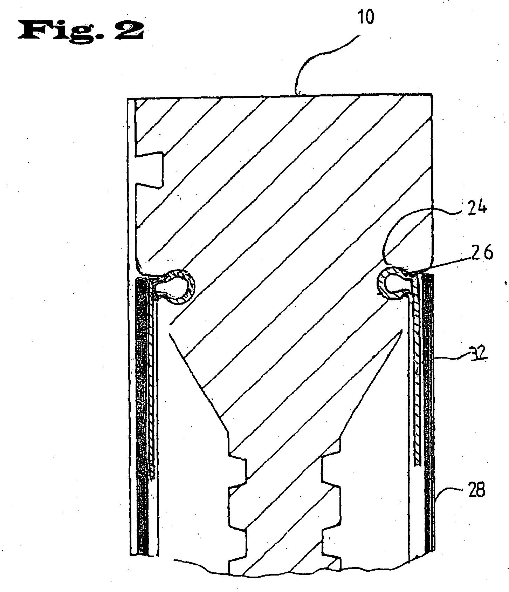

Figur 2 zeigt Einzelheiten der Befestigung des Randes des Filtertuch-Zuschnittes 28 an der Trägerplatte 10. Beim hier dargestellten Ausführungsbeispiel ist das Hohlkörperprofil 26 aus einem mit Luft aufblasbaren Kunststoffmaterial gefertigt. Es weist einen fahnenförmig abstehenden Saum 32 auf, über welchen das Hohlkörperprofil mit dem Filtertuch-Zuschnitt 28 in der oben näher bezeichneten Art und Weise verbunden ist.

Wie aus Figur 2 ferner ersichtlich, ist die Trägerplatte 10 symmetrisch zu einer Mittelebene ausgebildet, so dass dicht nebeneinander gestellte Trägerplatten jeweils flache Filterkammern begrenzen, die durch einen Filtertuch-Zuschnitt voneinander getrennt sind.

Um bei Druckbeaufschlagung dieser Filterkammern ein flächiges Anliegen des Filtertuchs am Boden der Vertiefungen 12 zu verhindern. Sind letztere mit angeformten Vorsprüngen 36 versehen.

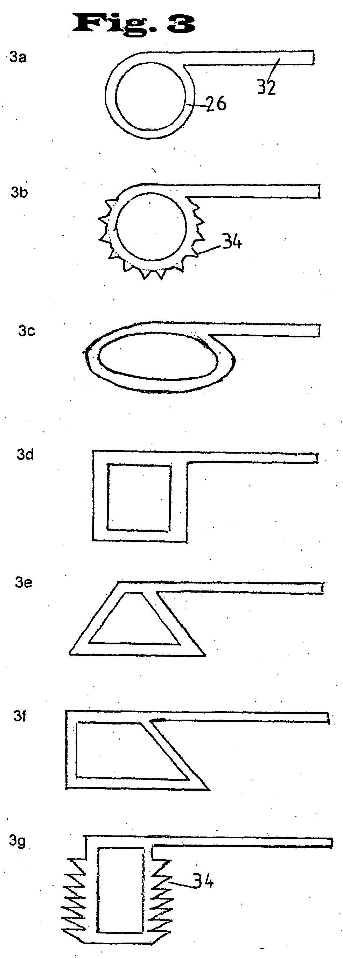

Die Figur 3 zeigt abgewandelte Querschnittsformen die Hohlkörperprofile 26, wobei hier jeweils die fahnenförmigen Saumbereiche 32 angeformt sind. Die verschiedenen Querschnittsformen sind in den jeweiligen Figuren 3a bis 3g gezeigt. So ergibt sich hier in Figur 3a ein kreisförmiger Querschnitt, in 3c ein ellipsenförmiger Querschnitt und in den Figuren 3d bis 3g jeweils eckige Querschnitte, wobei hier rechteckige, trapezförmige oder quadratische Querschnitte gewählt sind. Vorteilhaft können widerhakenartige Vorsprünge 34 vorgesehen sein, die eine noch bessere Verbindung des Hohlkörperprofils 26 innerhalb der Nut 24, die einen Hinterschnitt aufweist, ermöglicht.

An dem Hohlkörperprofil 26 ist ein Ventil 50 (vgl. Figur 1) vorgesehen, dass in eine entsprechende Ausnehmung innerhalb der Trägerplatte 10 eingelegt wird. Diese Ausnehmung wird in hier nicht dargestellter Art und Weise verschlossen.

Zur Montage wird der zuvor beschriebene konfektionierte Filtertuch-Zuschnitt 28 auf die Trägerplatte aufgelegt, wobei das integrierte Hohlkörperprofil 26 im entspannten Zustand in die in der Trägerplatte eingefräste Klemmnut 24 eingelegt wird.

Das integrierte Ventil 50 wird in die im Trägerprofil 10 befindliche Bohrung eingeführt. Mittels eines Druckluftanschlussschlauches (hier nicht näher dargestellt) wird das Hohlraumprofil beispielsweise mittels Luft mit einem Druck von ca. 2 bar aufgeblasen. Anschließend wird das Ventil mittels einer Ventilabdeckung geschlossen, um das System vor Verschmutzung zu schützen.

Zur Demontage wird das Ventil 50 des Hohlkörperprofils 26 geöffnet. Nach Entweichen der Luft kann das Filtermedium einfach von der Trägerplatte 10 abgenommen werden.

## Patentansprüche

1. Filterelement für ein Kammer-, Membranfilter oder dergleichen, mit einem plattenförmigen Tragkörper (10), in welchem Öffnungen (14, 16) zum Zuführen von zu filtrierendem Medium sowie zum Abführen von Filtrat vorgesehen sind, mit einem flexiblen Filtermedium-Zuschnitt (28) und mit einem Montagerahmen zum lösbaren Anbringen des Filtermedium-Zuschnittes (28) in einer am Tragkörper (10) vorgesehenen umlaufenden Montagenut (24) unter Verwendung eines in sich geschlossenen, aufblasbaren Hohlkörperprofils (26),
**dadurch gekennzeichnet,**
**dass** das in sich geschlossene, aufblasbare Hohlkörperprofil (26) am Rand des Filtermedium-Zuschnitts (28) angenäht, angeschweißt, angeklebt, angegossen und/oder angespritzt ist, wobei es zur Festlegung des Filtermedium-Zuschnitts (28) formschlüssig in der hinterschnittenen Montagenut (24) am Tragkörper (10) sitzt, dass das fahnenförmige Hohlkörperprofil (26) einen Saum (32) aufweist, über welchen das Hohlkörperprofil (26) mit dem Filtermedium-Zuschnitt (28) verbunden ist und dass die Porosität des Filtermedium-Zuschnitts (28) an der Befestigungsstelle unterbrochen ist, so dass Flüssigkeit im Filtertuch nicht über die Befestigungsstelle nach außen wandern kann.

2. Filterelement nach Anspruch 1, **dadurch gekennzeichnet, dass** am Hohlkörperprofil (26) ein Be- und/oder Entlüftungsventil angeordnet ist.

3. Filterelement nach einem der Ansprüche 1 oder 2, **dadurch gekennzeichnet, dass** das Hohlköperprofil (26) aus EPDM, NBR, Silikon oder Viton besteht.

4. Filterelement nach einem der Ansprüche 1 bis 3, **dadurch gekennzeichnet, dass** im Tragprofil Ausnehmungen vorgesehen sind, in die die Ventile des Hohlkörperprofils (26) einsetzbar sind.

5. Filterelement nach einem der Ansprüche 1 bis 4, **dadurch gekennzeichnet, dass** das Hohlkörperprofil (26) im Querschnitt kreisrund ist.

6. Filterelement nach einem der Ansprüche 1 bis 4, **dadurch gekennzeichnet, dass** das Hohlkörperprofil (26) im Querschnitt mehreckig ist.

7. Filterelement nach einem der Ansprüche 1 bis 4, **dadurch gekennzeichnet, dass** das Hohlkörperprofil (26) im Querschnitt ellipsenförmig ist.

8. Filterelement nach einem der Ansprüche 1 bis 4, **dadurch gekennzeichnet, dass** an der Oberfläche des Hohlkörperprofils (26) widerhakenartige Vorsprünge angeordnet sind.

## Claims

1. A filter element for a chamber filter, a membrane filter or the like, having a plate-shaped carrier body (10) in which openings (14, 16) are provided for the supply of medium to be filtered as well as for the draining of filtrate, having a flexible filter medium blank (28) and having an installation frame for the releasable attachment of the filter medium blank (28) in a peripheral installation groove (24) provided at the carrier body (10) using an inflatable hollow body section (26) closed on itself,
**characterized in that**
the inflatable hollow body section (26) closed on itself is sewn, welded, adhesively bonded, cast and/or injection molded at the edge of the filter medium blank (28), wherein it is seated in a shape matched manner in the undercut installation groove (24) at the carrier body (10) to define the filter medium blank (38); **in that** the flag-shaped hollow body section (26) has a seam (32) with which the hollow body section (26) is connected to the filter medium blank (28); and **in that** the porosity of the filter medium blank (26) is interrupted at the fastening site so that liquid in the filter cloth cannot migrate outwardly via the fastening site.

2. A filter element in accordance with claim 1, **characterized in that** an air supply and/or venting valve is arranged at the hollow body section (26).

3. A filter element in accordance with one of the claims 1 or 2, **characterized in that** the hollow body section (26) consists of EPDM, NBR, silicone or Viton.

4. A filter element in accordance with one of the claims 1 to 3, **characterized in that** cut-outs are provided in the support section and the valves of the hollow body section (26) can be inserted into them.

5. A filter element in accordance with one of the claims 1 to 4, **characterized in that** the hollow body section (26) is circular in cross-section.

6. A filter element in accordance with one of the claims 1 to 4, **characterized in that** the hollow body section (26) is polygonal in cross-section.

7. A filter element in accordance with one of the claims 1 to 4, **characterized in that** the hollow body section (26) is ellipsoid in cross-section.

8. A filter element in accordance with one of the claims 1 to 4, **characterized in that** barb-like projections are arranged at the surface of the hollow body section (26).

## Revendications

1. Élément de filtre pour un filtre à chambres, à membrane ou analogue, comprenant un corps de support (10) en forme de plaque, dans lequel des ouvertures (14, 16) sont prévues pour l'entrée d'un milieu à filtrer ainsi que pour la sortie de filtrat, avec une découpe flexible de médium filtrant (28) et avec un cadre de montage pour le montage amovible de la découpe de médium filtrant (28) dans une rainure de montage (24) périphérique prévue sur le corps de support (10) au moyen d'un profil de corps creux (26) gonflable, fermé sur lui-même,
**caractérisé en ce que**
le profil de corps creux (26) gonflable fermé sur lui-même est cousu, soudé, collé, coulé et/ou moulé par injection au bord de la découpe de médium filtrant (28), le profil de corps creux (26) logeant par coopération de forme dans la rainure de montage (24) contre-dépouillée sur le corps de support (10) pour la fixation de la découpe de médium filtrant (28), **en ce que** le profil de corps creux (26) en forme de drapeau présente une bordure (32), par laquelle le profil de corps creux (26) est relié à la découpe de médium filtrant (28) et **en ce que** la porosité de la découpe de médium filtrant (28) est interrompue au point de fixation de sorte que du liquide dans le tissu filtrant ne peut pas migrer vers l'extérieur via le point de fixation.

2. Élément de filtre selon la revendication 1, **caractérisé en ce qu'**une soupape d'aération et/ou de purge d'air est agencée sur le profil de corps creux (26).

3. Élément de filtre selon l'une des revendications 1 ou 2, **caractérisé en ce que** le profil de corps creux (26) est composé d'EPDM, de NBR, de silicone ou de Viton.

4. Élément de filtre selon l'une des revendications 1 à 3, **caractérisé en ce que** des évidements sont prévus dans le profil de support, dans lesquels les soupapes du profil de corps creux (26) peuvent être placées.

5. Élément de filtre selon l'une des revendications 1 à 4, **caractérisé en ce que** le profil de corps creux (26) présente une section transversale circulaire.

6. Élément de filtre selon l'une des revendications 1 à 4, **caractérisé en ce que** le profil de corps creux (26) présente une section transversale polygonale.

7. Élément de filtre selon l'une des revendications 1 à 4, **caractérisé en ce que** le profil de corps creux (26) présente une section transversale en forme d'ellipse.

8. Élément de filtre selon l'une des revendications 1 à 4, **caractérisé en ce que** des saillies de type ardillon sont agencées sur la surface du profil de corps creux (26).
